# EUROPEAN PATENT APPLICATION

(11) **EP 2 664 986 A2**
(43) Date of publication of application: **20.11.2013**
(21) Application number: 13167634.8
(22) Date of filing: 14.05.2013
(51) Int. Cl.: G06F 3/0488, G06F 3/0485, G06F 3/0482

(54) **Method and electronic device thereof for processing function corresponding to multi-touch**

(30) Priority: 14.05.2012 KR 20120050857
(71) Applicant: Samsung Electronics Co., Ltd, Gyeonggi-do 443-742 (KR)
(72) Inventor: Cho, Young-Jun, Gyeonggi-do (KR); Lee, Jae Chul, Gyeonggi-do (KR)
(74) Representative: Nederlandsch Octrooibureau

(57) **Abstract**

A method for processing a function corresponding to a multi-touch in an electronic device is provided. In the method, data is displayed in one or more formats. A first touch is detected. If a second touch is detected with the first touch being maintained, a function corresponding to a multi-touch operation is performed. The function corresponding to the displayed data type and the second touch is performed based on coordinates of the first touch.

## Description

### BACKGROUND OF THE INVENTION

### 1. Field of the Invention

The present invention relates to a method and an electronic device that process multiple touches on a touch screen. More particularly, the present invention relates to performing a function corresponding to a multi-touch.

### 2. Description of the Related Art

Generally, various electronic devices have input units for receiving data and output units for outputting data. A representative conventional input unit for an electronic device typically comprises a keypad, and a representative output unit for an electronic device typically comprises a Liquid Crystal Display (LCD) device. In case where an electronic device has one or more separate respective input units and output units, causing the volume of the electronic device to increase indispensably depending on the number and size of input units and output units.

Accordingly, a touchscreen for performing an input function and an output function simultaneously while reducing the volume of the electronic device is being brought to the market. While a conventional touchscreen receives data via a touch of a user's finger, more recently, a composite touchscreen having a pen input device (generally referred to as a 'touch pen') as an auxiliary input means and selectively receiving data using the touch pen is being brought to the market. An electronic device having the composite touchscreen may detect a multi-touch where a hand touch and a pen touch occur simultaneously. However, the conventional art has not provided a specific alternative for a multi-touch.

### SUMMARY OF THE INVENTION

An object of the present invention addresses at least some of the above-mentioned problems and/or disadvantages and provides at least the advantages described below. Accordingly, an aspect of the present invention is to provide a method and an apparatus for processing a function corresponding to (activated by) a multi-touch in an electronic device.

A further object of the present invention is to provide a method and an apparatus for processing a function corresponding to a first touch and a second touch when the second touch occurs with the first touch detected in an electronic device.

A further object of the present invention provides a method and an apparatus for processing a function corresponding to a second touch based on coordinates of a first touch in an electronic device.

A further object of the present invention is provide a method and an apparatus for processing a function corresponding to a multi-touch with consideration of a displayed data type in an electronic device.

In accordance with a first aspect of the present invention at least one of the above mentioned objects is achieved in a method for processing a multi-touch function in an electronic device, the method comprising:
displaying data of a predetermined data type by a display unit having a touchscreen;
detecting a first touch by the touchscreen;
detecting a second touch by the touchscreen while the first touch of the touchscreen is maintained; and
performing by a processor a function corresponding to the displayed data type and the second touch based on coordinates of the first touch.

In accordance with a second aspect of the present invention at least one the above mentioned objects is achieved in an electronic device for processing a function corresponding to a multi-touch, the electronic device comprising:
at least one processor;
a touch screen,
a memory for storing programs and data;
the at least one processor being arranged to control the touch screen and the memory, wherein the at least one processor is further arranged to control displaying data, detecting a first touch, and detecting a second touch while the first touch is maintained to perform a function corresponding to a displayed data type and the second touch based on coordinates of the first touch.

Further advantageous embodiments are defined in the dependent claims.

Other exemplary aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other exemplary aspects, features and advantages of certain exemplary embodiments of the present invention will become more apparent to a person of ordinary skill in the art from the following description taken in conjunction with the accompanying drawings in which:
FIG. 1 is a block diagram illustrating an electronic device for processing a function corresponding to a multi-touch according to an exemplary embodiment of the present invention;
FIG. 2A is a flowchart illustrating an exemplary operational procedure for processing a function corresponding to a multi-touch in an electronic device according to an exemplary embodiment of the present invention;
FIG. 2B is a view illustrating a device for performing a procedure for processing a function corresponding to a multi-touch in an electronic device according to an exemplary embodiment of the present invention;
FIG. 3 is a flowchart illustrating an exemplary operational procedure for processing a function corresponding to a multi-touch with consideration of a data type in an electronic device according to an exemplary embodiment of the present invention;
FIG. 4A is a flowchart illustrating an exemplary operational procedure for processing a function corresponding to a multi-touch when displaying data of a text type in an electronic device according to an exemplary embodiment of the present invention;
FIG. 4B is a view illustrating exemplary screen configuration for processing a function corresponding to a multi-touch when displaying data of a text type in an electronic device according to an exemplary embodiment of the present invention;
FIG. 5A is a flowchart illustrating an exemplary operational procedure for processing a function corresponding to a multi-touch when displaying data of a list type in an electronic device according to another exemplary embodiment of the present invention;
FIG. 5B is a view illustrating exemplary screen configurations for processing a function corresponding to a multi-touch when displaying data of a list type in an electronic device according to another exemplary embodiment of the present invention;
FIG. 6A is a flowchart illustrating an exemplary operational procedure for processing a function corresponding to a multi-touch when displaying data of an authentication request type in an electronic device according to still another exemplary embodiment of the present invention;
FIG. 6B is a view illustrating exemplary screen configurations for processing a function corresponding to a multi-touch when displaying data of an authentication request type in an electronic device according to still another exemplary embodiment of the present invention;
FIG. 7A is a flowchart illustrating an exemplary operational procedure for processing a function corresponding to a multi-touch when displaying data of an image type in an electronic device according to yet another exemplary embodiment of the present invention;
FIG. 7B is a view illustrating exemplary screen configurations for processing a function corresponding to a multi-touch when displaying data of an image type in an electronic device according to yet another exemplary embodiment of the present invention;
FIG. 7C is a view illustrating exemplary screen configurations for processing a function corresponding to a multi-touch when displaying data of an image type in an electronic device according to yet another exemplary embodiment of the present invention;
FIG. 7D is a view illustrating exemplary screen configurations for processing a function corresponding to a multi-touch when displaying data of an image type in an electronic device according to yet another exemplary embodiment of the present invention;
FIG. 7E is a view illustrating exemplary screen configurations for processing a function corresponding to a multi-touch when displaying data of an image type in an electronic device according to yet another exemplary embodiment of the present invention; and
FIG. 7F is a view illustrating exemplary screen configurations for processing a function corresponding to a multi-touch when displaying data of an image type in an electronic device according to yet another exemplary embodiment of the present invention.

Throughout the drawings, like reference numerals will be understood to refer to like parts, components and structures.

### DETAILED DESCRIPTION

The following description with reference to the accompanying drawings is provided to assist a person of ordinary skill in the art with a comprehensive understanding of exemplary embodiments of the invention as defined by the claims and their equivalents. The description includes various specific details to assist in that understanding but these exemplary embodiments are to be regarded as merely illustrative and nature and do not limit the claimed subject matter as such. Accordingly, those of ordinary skill in the art will recognize that various changes and modifications of the exemplary embodiments described herein can be made without departing from the scope and spirit of the invention. Also, descriptions of well-known functions and constructions may be omitted for clarity and conciseness when their inclusion may obscure appreciation by a person of ordinary skill in the art.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

In the following description, an electronic device includes but is not limited to a mobile communication terminal, a smart phone, a tablet personal computer (PC), a digital camera, an MP3 player, a navigation, a laptop computer, a netbook, a computer, a television, a refrigerator, an air conditioner, etc. that can receive a touch input.

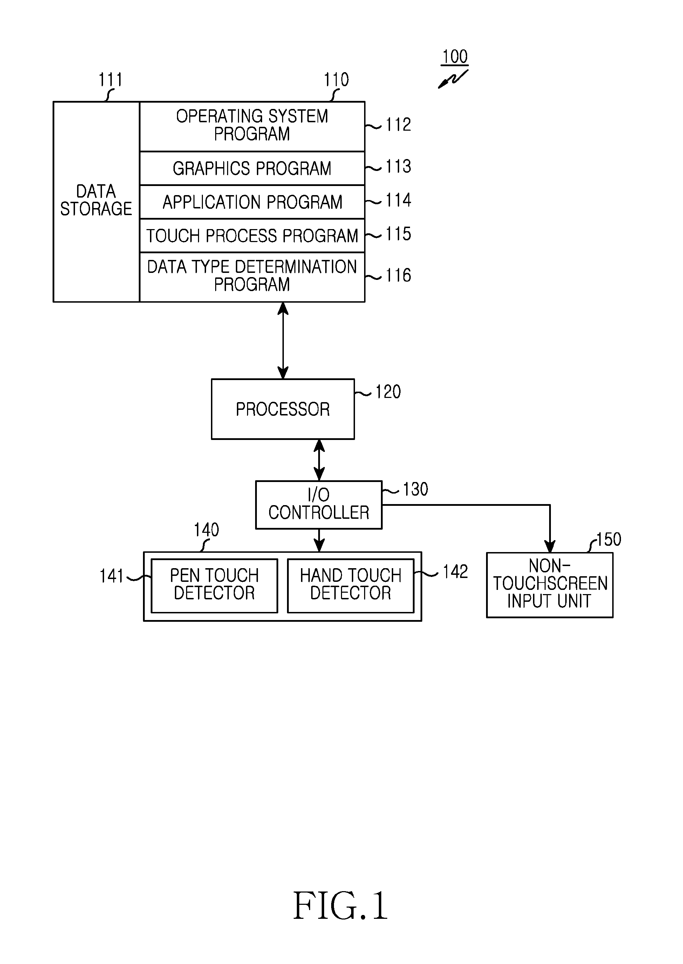

It is to be understood that with regard to the presently claimed invention the term "touch" includes bringing a finger, pointer, special pen, stylus etc. to come at least within a predetermined distance of the touch screen to be detected by sensors. Thus, one of both of the multi-touch touches could be contactless (near-touch) that come within the predetermined distance of the touchscreen. FIG. 1 is a block diagram illustrating an example of an electronic device for processing a function corresponding to a multi-touch according to an exemplary embodiment of the present invention.

Referring now to FIG. 1, the electronic device 100 may include a memory 110, a processor 120, an Input/Output (I/O) controller 130, a touchscreen 140, and a non-touchscreen input unit 150. A plurality of memories 110 and processors 120 may be configured. The processor 120 and controller 130 comprise hardware such as a microprocessor that is configured with machine executable code. The memory 110 comprises a non-transitory machine readable medium including a data storage 111, an operating system program 112, a graphics program 113, an application program 114, a touch process program 115, a data type determine program 116, etc. Also, since a program which is a software element may be expressed in terms of a set of instructions, the program may be also expressed as an instruction set. The program may be also expressed as a module.

The memory 110 may store one or more programs including instructions for performing an exemplary embodiment of the present invention.

The data storage 111 stores data occurring during execution of a function corresponding to a program stored in the memory 110. The data storage 111 according to the present invention may store a multi-touch function corresponding to each data type determined by the data type determination unit 116. Here, the data type may be one of a text type, a list type, an image type, an audio type, and an authentication request type.

For example, the data storage 111 may store information representing that a category of multi-touch function corresponding to an image type is an image magnify function, a reduce function, a rotate function, an invert function, and an incline function, and that a multi-touch function corresponding to a text type is a text highlight mark function, a duplicate function, a store function, a search function, a crop function, and a delete function. Also, the data storage 111 stores information regarding a touch method corresponding to each multi-touch function. For example, the data storage 111 may store information representing that a touch method corresponding to an image reduce function is a method in which a second touch is dragged in a coordinate direction of a first touch.

The operating system program 112 (for example, a built-in operating system such as WINDOWS, LINUX, Darwin, RTXC, UNIX, OS X, or VxWorks) includes various software configurations for controlling general system operations. For example, the control of the general system operation denotes memory management and control, storage hardware (device) control and management, power control and management, etc. The operating system program 112 performs a function for smoothing communication between various hardware (devices) and software elements (programs).

The graphics program 113 includes various software elements for displaying graphics on the touchscreen 140. Graphics denotes text, a list, a web page, an icon, a digital image, a video, animation, etc.

According to the present invention, the graphics program 113 includes an instruction for displaying various types of data on the touchscreen 140, and includes an instruction for visually displaying a function executed by a first touch and a second touch.

For example, the graphics program 113 may include an instruction for displaying a graphics of a text type on the touchscreen 140, and include an instruction for visually displaying a highlight mark for a specific sentence selected by a first touch and a second touch. Hardware such as a processor 120 is configured performing graphics instructions of the graphics program 113.

The application program 114 includes applications such as a browser, an electronic mail, an instant message, word processing, keyboard emulation, an address book, a touch list, a widget, Digital Right Management (DRM), voice recognition, voice duplication, a position determining function, a location based service, etc., just to name a few possibilities.

The touch process program 115 sequentially detects a first touch and a second touch from a user, and detects coordinates of the first touch and the second touch. In more detail, in the case where the second touch is detected with the first touch maintained at specific coordinates, the touch process program 115 transmits a message querying a type of currently displayed data to the data type determination program 116. At this point, the type of the displayed data denotes a type of data displayed at a position corresponding to the coordinates of the first touch.

If a message representing the type of currently displayed data is received from the data type determination program 116, the touch process program 115 retrieves and determines at least one multi-touch function corresponding to the type of the currently displayed data from the data storage 111. For example, in the case where it is determined that the type of the currently displayed data is an image type by the data type determination program 116, the touch process program 115 may determine a multi-touch function corresponding to the image type is a multi-touch function such as magnification, reduction, reversion, inclination, rotation, etc.

With continued reference to FIG. 1, the touch process program 115 calculates the shape, the progress direction, and the progress distance of a second touch based on the coordinates of a first touch, and performs a multi-touch function corresponding to the coordinates of the first touch, the shape, the progress direction, and the progress distance of the second touch among the determined multi-touch functions.

For example, in the case where the currently displayed data type is an image type and the second touch is dragged in a coordinate direction of the first touch with the first touch maintained at specific coordinates, the touch process program 115 determines that the detected multi-touch method is a method corresponding to a reduce function selected from among a magnify function, a reduce function, an invert function, an incline function, and a rotate function corresponding to an image, calculates a drag direction and a drag distance of the second touch, and then reduces an image by a ratio or a size corresponding to the calculated distance.

If the first touch is not maintained at specific coordinates, the touch process program 115 performs a function corresponding to the first touch. For example, in the case where the first touch is a tap, the touch process program 115 determines that the first touch is not maintained and performs a function corresponding to the tap. For another example, in the case where the first touch is a drag, the touch process program 115 determines that the first touch is not maintained and performs a function corresponding to the drag. In addition, in the case where the first touch is maintained but a second touch is not detected within a multi-touch detect time, the touch process program 115 performs a function set in advance to be executed if a specific region is touched for a predetermined time.

In the case where a message querying the type of currently displayed data is received from the touch process program 115, the data type determination program 116 determines the type of the currently displayed data.

Though not shown, the processor 120 may include at least one processor and a peripheral interface. A sub-processor may be included as well. Also, the processor 120 executes a specific program (instruction set) stored in the memory 110 to execute a plurality of specific functions corresponding to the program.

The I/O controller 130 preferably includes an input unit such as the touchscreen 140 and the non-touchscreen input unit 150 to provide an interface to a user.

The touchscreen 140 may include a pen touch detector 141 and a hand touch detector 142. The touchscreen 140 provides an interface for touch input/output between the electronic device 100 and the user. Specifically, the touchscreen 140 serves as a medium for transferring the user's touch input to the electronic device 100 and visually providing an output from the electronic device 100 to the user. The touchscreen 140 may use various display technologies such as a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), and a Flexible LED (FLED), etc. The touchscreen 140 of the present invention is not limited to a touchscreen that uses these display technologies.

The touchscreen 140 according to the present invention may allow the pen touch detector 141 and the hand touch detector 142 to receive and process a pen touch input and a hand touch input, respectively. At this point, the first touch and the second touch may be the same touch method detected by one of the pen touch detector 141 and the hand touch detector 142, and/or may be different touch methods detected by the pen touch detector 141 and the hand touch detector 142, respectively.

The pen touch detector 141 may detect that the user's pen contacts the touchscreen and determine the coordinates of a position contacted by the user's pen. The pen touch detector 141 may detect a contact of an external device (for example, a stylus pen) using one of a resistive layer method, a pressure-sensitive method, and an ultrasonic wave method, just to name some non-limiting examples.

The hand touch detector 142 can detect that a user' hand contacts the touchscreen, and determine coordinates of a position contacted by the user's hand. The hand touch detector 142 may detect that the user's hand contacts the touchscreen using one of a resistive layer method, a pressure-sensitive method, a capacitive method, an infrared method, and an ultrasonic wave method. In some of the methods, actual contact may not be required so long as the hand, for example, comes within a predetermined distance of the handtouch detector or the touchscreen.

The non-touchscreen input unit 150 may include one or more up/down buttons for volume control. Also, the button may be a push button, a rocker button, etc. The different input unit 150 may be a rocker switch, a thumb-wheel, a dial, a stick, and/or a pointer device such as a stylus.

Though the present invention has described a method allowing the data type determination program 116 to determine a type of displayed data and allowing the touch process program 115 to perform a function corresponding to a first touch and a second touch, the processor 120 may directly perform functions performed by the data type determination program 116 and the touch process program 115 depending on a design method.

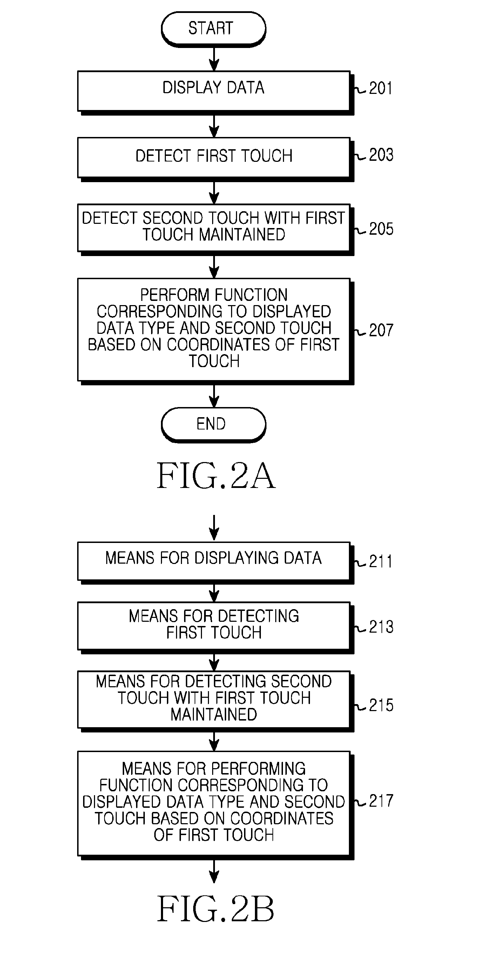

Also, although not shown, the device may include a wireless transceiver for communication via one or more wireless protocols including ranging from near field to RF, for example. A decoder and an encoder may also be included. FIG. 2A illustrates an exemplary procedure for processing a function corresponding to a multi-touch in an electronic device according to an exemplary embodiment of the present invention.

Referring now to FIG. 2A, the electronic device 100 displays data in step 201. At this point, displayed data includes one of text data, list data, image data, audio data, and authentication request data.

At step 203, the electronic device 100 detects a first touch for currently displayed data from a user, and then at step 205 detects an additional second touch with the first touch maintained. After that, the electronic device 100 performs step 207 to perform a function corresponding to the displayed data type and the second touch based on the coordinates of the first touch.

FIG. 2B illustrates an exemplary device for performing a procedure for processing a function corresponding to a multi-touch in an electronic device according to an exemplary embodiment of the present invention.

Referring to FIG. 2B, the electronic device 100 includes a means 211 for displaying data. From a hardware standpoint, such a means constitutes a display. At this point, the displayed data includes one of text data, list data, image data, audio data, and authentication request data.

The electronic device 100 includes a means 213 for detecting a first touch for currently displayed data from a user which from a hardware standpoint comprises a first touch sensor/detector, and a means 215 for detecting an additional second touch which comprises a second touch sensor while the first touch is maintained as detected by the first touch sensor. Also, the electronic device 100 includes a means 217 for performing a function corresponding to the displayed data type and the second touch based on the coordinates of the first touch. From a hardware standpoint, a processor or microprocessor controls performance of the function, which may be in conjunction with additional hardware.

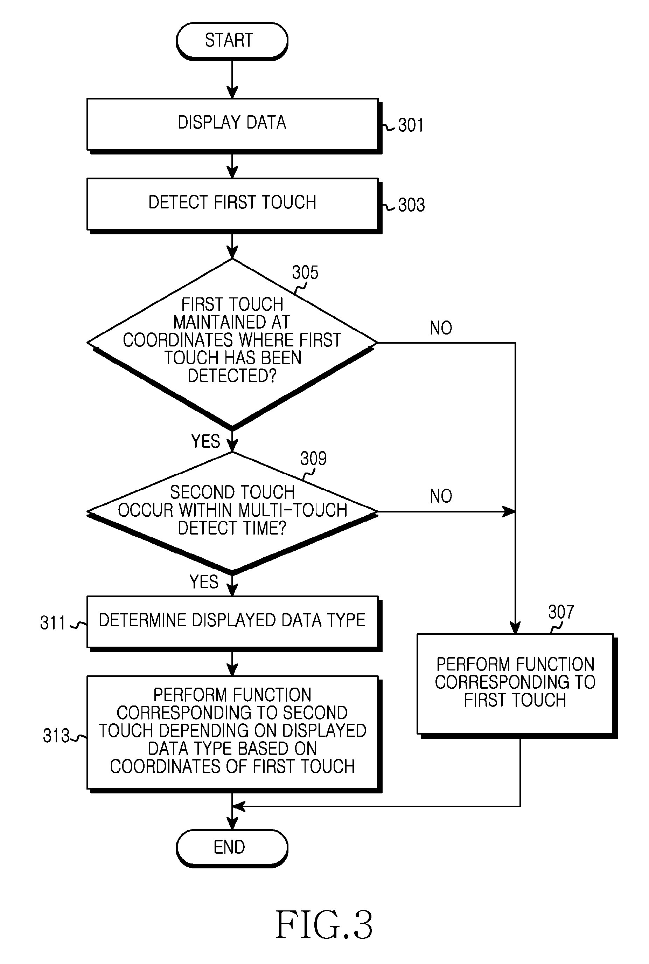

FIG. 3 illustrates a procedure for processing a function corresponding to a multi-touch with consideration of a data type in an electronic device according to an exemplary embodiment of the present invention.

Referring now to FIG. 3, at step 301 the electronic device displays data. At this point, the displayed data preferably includes at least one of text data, list data, image data, audio data, and authentication request data.

After that, at step 303 the electronic device 100 detects a first touch generated by a user. Here, the first touch may include a tap, a multi-tap, a tap for one region for a predetermined time, a drag, etc.

At step 305, the electronic device 100 determines whether the first touch is maintained at coordinates where the first touch has been detected.

In the case where the first touch is not maintained at the coordinates where the first touch has been detected, the electronic device 100 next at step 307 performs a function corresponding to the first touch, and then ends the algorithm according to an embodiment of the present invention. For example, in the case where a tap is detected as a first touch, the electronic device 100 determines that the first touch is not maintained and performs a predetermined function corresponding to the tap.

In contrast, in the case where the first touch is maintained at the coordinates where the first touch has been detected, the electronic device 100 performs step 309 to determine whether a second touch occurs within a multi-touch detect time stored in advance with the first touch maintained. For example, in the case where the multi-touch detect time is two seconds, the electronic device 100 determines whether the additional second touch is detected from the user within two seconds after the first touch has been detected. The two seconds is a predetermined time period of multi-touch detect time, and can be shorter or longer as desired. The predetermined time period may be set as a changeable default.

If the second touch does not occur within the multi-touch detect time, the electronic device 100 at step 307 performs a function corresponding to the first touch, and then ends the algorithm according to the embodiment of the present invention. For example, in the case where a pop-up message is displayed when one region is touched for two seconds, when determining that the second touch has not occurred within two seconds with the first touch being maintained, the electronic device 100 displays the pop-up message.

In contrast, when the second touch occurs within the multi-touch detect time, the electronic device 100 at step 311 determines the type of the displayed data. In other words, the electronic device 100 determines the data type of an object on which the first touch is currently maintained. At this point, the data type may be one of a text type including a letter, a list type including a contents list, an image type including a photo and a moving picture, an audio type including an mp3 file, and an authentication request type including a lock screen.

Subsequently, at step 313, the electronic device 100 performs a function corresponding to the displayed data type and the second touch based on the coordinates of the first touch. The electronic device 100 may determine at least one multi-touch function corresponding to the determined data type, and determine a function corresponding to the second touch among the multi-touch functions determined depending on the touch method of the second touch. For example, in the case where the determined data type comprises an image type, the electronic device 100 may determine a magnify function, a reduce function, a rotate function, an invert function, an incline function, etc., which are multi-touch functions corresponding to the image type, and determine that a function corresponding to a touch method of the second touch is a rotate function. In other words, the electronic device 100 determines a function corresponding to the data type determined in step 311 and the touch method of the second touch, and performs a relevant function based on the coordinates of the first touch.

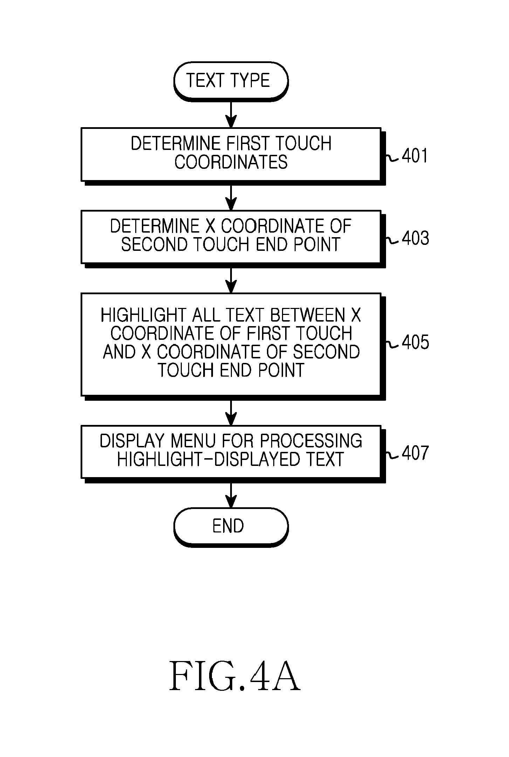

Hereinafter, step 313 of FIG. 3 is discriminated and described in detail for each data type based on FIGS. 4A, 4B, 5A, 5B, 6A, 6B, 7A, 7B, 7C, 7D, 7E and 7F.

FIG. 4A illustrates an exemplary operational procedure for processing a function corresponding to a multi-touch when displaying data of a text type in an electronic device according to an exemplary embodiment of the present invention.

Referring now to FIG. 4A, at step 401, the electronic device 100 determines coordinates of a first touch. At this point, it is assumed that the first touch is maintained at specific coordinates. After that, the electronic device 100 determines an X coordinate of a point at which a second touch ends. For example, in the case where the second touch is a drag, the electronic device 100 determines an X coordinate of a point at which the drag ends. When the X coordinate of the point at which the second touch ends is determined, at step 405 the electronic device 100 highlights all text between the X coordinate of the first touch and the X coordinate of the second touch end point among text corresponding to a Y coordinate of the first touch.

Subsequently, at step 407 the electronic device 100 displays a menu for processing the highlighted text, and then ends the algorithm according to an embodiment of the present invention. At this point, the highlight may include at least one of a block mark, text color change, text size change, and an underline. The menu for processing text may include at least one of copy, store, search, and crop.

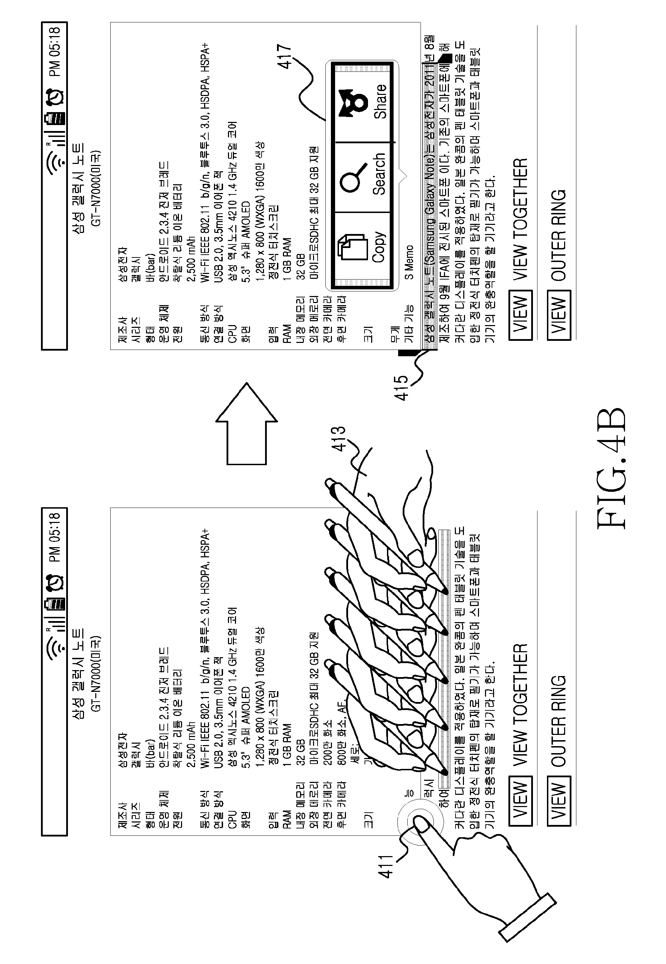

For example, as illustrated in FIG. 4B, the electronic device 100 highlights (415) text "Samsung Galaxy Note was manufactured by Samsung Electronics on 2011" positioned between an X coordinate of a first touch 411 and an X coordinate of a point at which a drag of a second touch 413 ends among text "Samsung Galaxy Note was manufactured by Samsung Electronics on 2011. 8" corresponding to a Y coordinate of the first touch 411, and then displays a menu 417 for processing the text.

Though the present invention has described a method for highlighting text positioned between an X coordinate of a first touch and an X coordinate of a second touch end point among text positioned at a Y coordinate of the first touch, a method for highlighting corresponding all text with consideration of both an X coordinate and a Y coordinate of the coordinates of the first touch and the coordinates of the second touch depending on a design method is also possible and within the scope of the claimed invention.

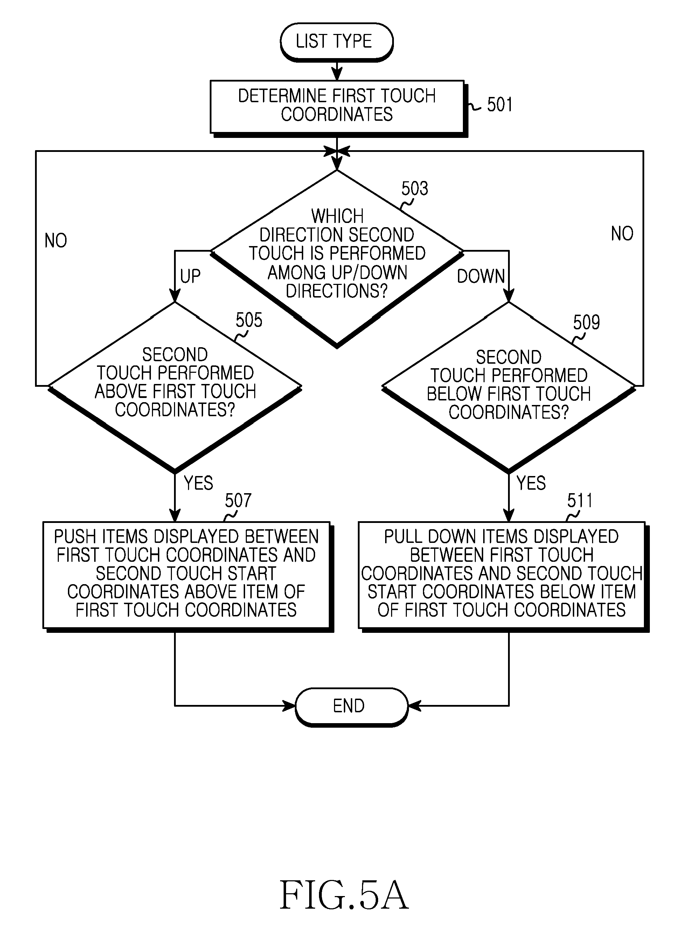

FIG. 5A illustrates a procedure for processing a function corresponding to a multi-touch when displaying data of a list type in an electronic device according to another exemplary embodiment of the present invention.

Referring now to FIG. 5A, at step 501 the electronic device 100 determines the coordinates of a first touch. At this point, it is assumed that the first touch is maintained at specific coordinates. After that, at step 503 the electronic device 100 determines in which direction a second touch is performed among up/down directions.

If the second touch is performed in the up-direction at step 503, then the electronic device 100 at step 505 determines whether the second touch is performed higher than the coordinates of the first touch. At this point, if the second touch is not performed higher than the coordinates of the first touch, the electronic device 100 again performs step 503. In contrast, if the second touch is performed higher than the coordinates of the first touch, the electronic device 100 at step 507 pushes items displayed between the first touch coordinates and the second touch start coordinates above an item of the first touch coordinates in a currently displayed list.

If at step 503 the second touch is performed in the down-direction, the electronic device 100 at step 509 determines whether the second touch is performed lower than the first touch coordinates. At this point, if the second touch is not performed lower than the first touch coordinates, the electronic device 100 again performs step 503. In contrast, if the second touch is performed lower than the first touch coordinates, the electronic device 100 at step 511 drags down items displayed between the first touch coordinates and the second touch start coordinates below the item of the first touch coordinates in the currently displayed list.

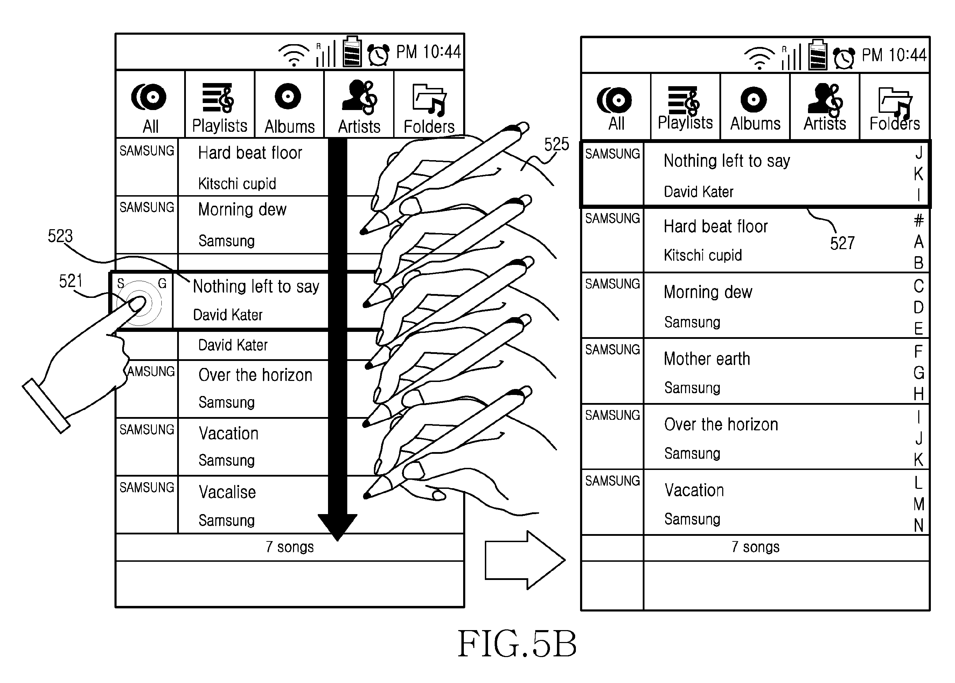

For example, as illustrated in FIG. 5B, while the electronic device 100 displays a music list, after a first touch 521 is detected at a position where an item "Nothing left to say" 523 has been displayed, when it is determined that a second touch 525 occurs at a position where an item "Hard beat floor" has been displayed and is dragged below the item "Nothing left to say" 523, the electronic device 100 drags down an item "Hard beat floor" and an item "Morning dew" below the item "Nothing left to say" 523 to rearrange the list. Accordingly, the item "Nothing left to say" 523 is positioned above the item "Hard beat floor" and the item "Morning dew".

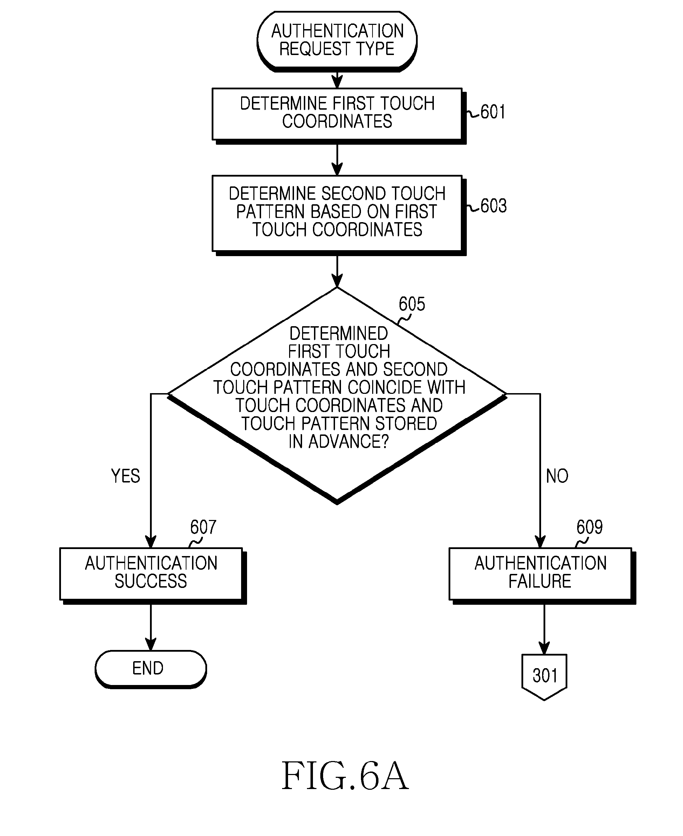

FIG. 6A illustrates a procedure for processing a function corresponding to a multi-touch when displaying data of an authentication request type in an electronic device according to still another exemplary embodiment of the present invention.

Referring now to FIG. 6A, at step 601 the electronic device 100 determines coordinates of a first touch. At this point, it is assumed that the first touch is maintained at specific coordinates. At step 603, the electronic device 100 determines a second touch pattern based on the coordinates of the first touch. At this point, the second touch pattern includes all patterns used in a lock screen.

After that, at step 605 the electronic device 100 determines whether the determined first touch coordinates and the second touch pattern coincide with authentication coordinates and a pattern stored in advance, respectively. At this point, the authentication coordinates and the pattern stored in advance may be authentication coordinates and a pattern set in advance in the electronic device 100, and may be authentication coordinates and a pattern stored in advance by a user. The authentication coordinates and the pattern may be changed by the user.

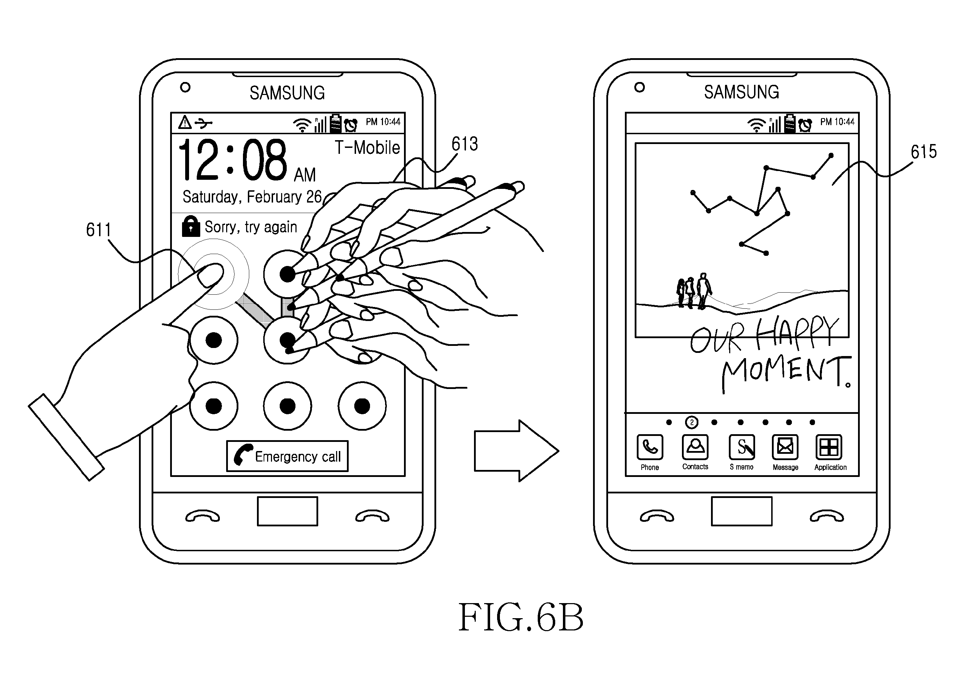

If the determined first touch coordinates and the second touch pattern coincide with the authentication coordinates and the pattern stored in advance, then at step 607 the electronic device 100 determines a user authentication success, allows a user access to a relevant function, and then ends the algorithm according to an embodiment of the present invention. For example, as illustrated in FIG. 6B, the electronic device 100 determines coordinates of a first touch 611 while displaying data requesting user authentication for an access to the electronic device 100, and determines a second touch pattern 613 based on the first touch 611. After that, in the case where the determined first touch coordinates 611 and second touch pattern 613 coincide with authentication coordinates and a touch pattern stored in advance, the electronic device 100 releases a lock screen to display a standby screen 615.

In contrast, when the determined first touch coordinates 611 and second touch pattern 613 do not coincide with the authentication coordinates and the touch pattern stored in advance, the at step 609 the electronic device 100 determines that user authentication has failed, and returns to step 301 of FIG. 3 to re-perform subsequent steps. At this point, if the user authentication fails, the electronic device 100 does not allow a user access and may detect a first touch again or display an inform message representing that the user authentication fails.

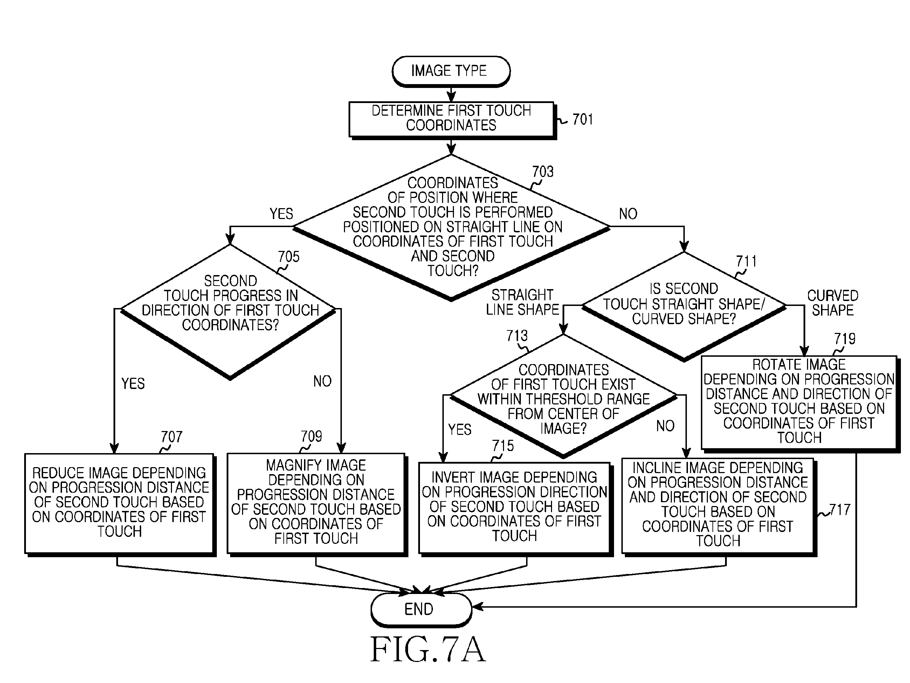

FIG. 7A illustrates a procedure for processing a function corresponding to a multi-touch when displaying data of an image type in an electronic device according to yet another exemplary embodiment of the present invention.

Referring now to FIG. 7A, at step 701 the electronic device 100 determines coordinates of a first touch. At this point, it is assumed that the first touch is maintained at specific coordinates. At step 703, the electronic device 100 determines whether the coordinates of a position where a second touch is performed are positioned on a straight line on the coordinates of the first touch and the coordinates of the second touch.

If the coordinates of a position where the second touch is performed are positioned on the straight line on the coordinates of the first touch and the coordinates of the second touch, the electronic device 100 at step 705 determines whether a progression direction of the second touch is performed in a first touch coordinate direction. For example, if the second touch is a drag, the electronic device determines whether the drag is performed toward the first touch coordinate direction.

In the case where at step 705 the progression direction of the second touch is performed in the first touch coordinate direction, then at step 707 the electronic device 100 reduces an image depending on a progression distance of the second touch based on the coordinates of the first touch, and then ends the algorithm according to an embodiment of the present invention.

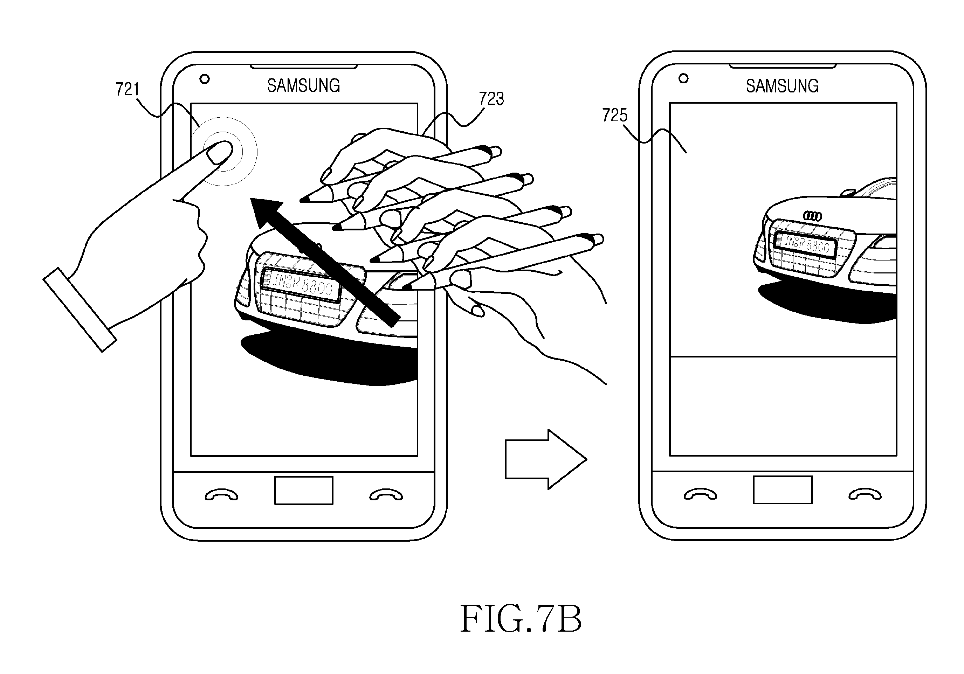

For example, as illustrated in FIG. 7B, while the electronic device 100 displays an image, after the coordinates of a first touch 721 are detected, when coordinates of a position where a second touch 723 is performed form a straight line with the coordinates of the first touch 721 and gradually get close to the coordinates of the first touch 721, the electronic device reduces a relevant image by a ratio or a size corresponding to a progression distance of the second touch based on the coordinates of the first touch 721, and displays the same.

In the case where the progression direction of the second touch is not performed in the first touch coordinate direction in step 705, the electronic device 100 at step 709 magnifies the image depending on a progression distance of the second touch based on the coordinates of the first touch, and then ends the algorithm according to the embodiment of the present invention.

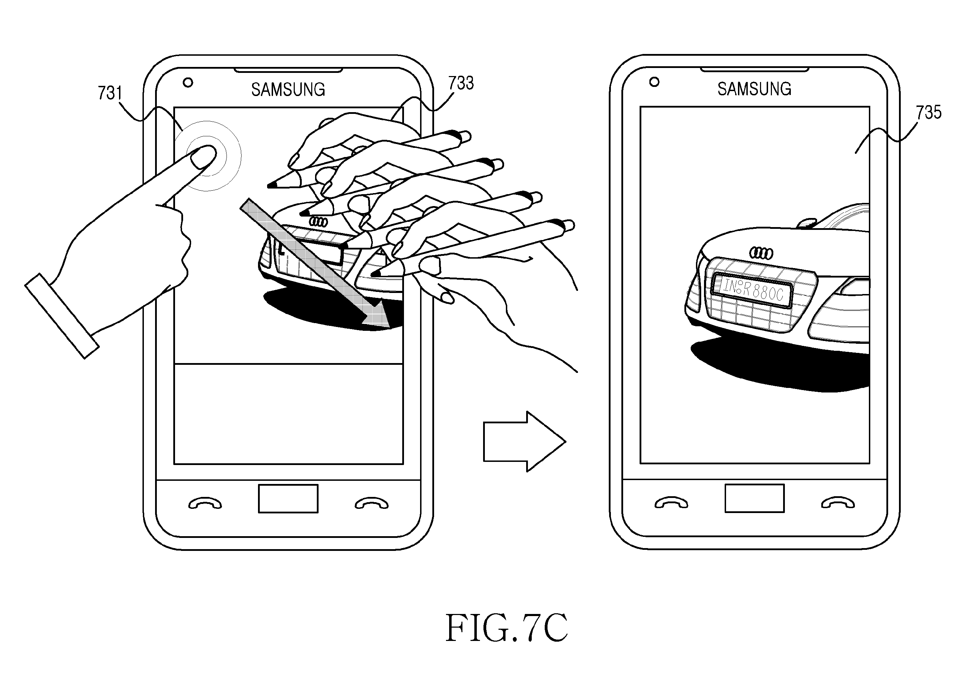

For example, as illustrated in FIG. 7C, while the electronic device 100 displays an image, after the coordinates of a first touch 731 are detected, when coordinates of a position where a second touch 733 is performed form a straight line with the coordinates of the first touch 731 and is gradually separated from the coordinates of the first touch 731, the electronic device magnifies the relevant image by a ratio or a size corresponding to a progression distance of the second touch based on the coordinates of the first touch 731, and displays the same.

In contrast, in the case where it is determined that the coordinates of the position where the second touch is performed are not positioned on the straight line on the coordinates of the first touch and the coordinates of the second touch in step 703, the electronic device 100 at step 711 determines whether the second touch is a straight touch or a curved touch.

If the second touch is a straight touch, the electronic device 100 at step 713 determines whether the coordinates of the first touch exist within a threshold range from the center of the image. At this point, the center of the image may be obtained by a method set in advance in the electronic device when a data image is displayed, and the threshold range may be a range set in advance in the electronic device 100.

If at step 713 the coordinates of the first touch exist within the threshold range from the center of the image, the electronic device 100 at step 715 inverts the image in up/down or left/right depending on the progression direction of a second touch based on the coordinates of the first touch, and then ends the algorithm according to an embodiment of the present invention. At this point, the invert direction of the image may be determined depending on a direction in which the second touch is performed based on the coordinates of the first touch.

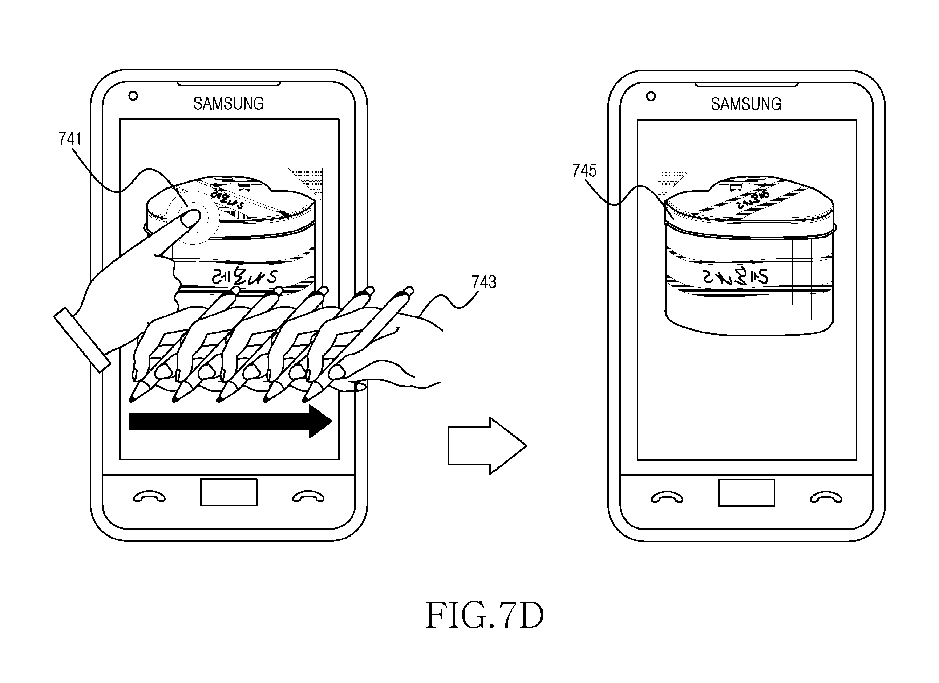

A start coordinate of the second touch is a point where the second touch begins a movement and the end touch is where the second touch ends. For example, FIG. 7B shows the movement of a stylus in the direction of the arrow from a start coordinate to an end coordinate of the second touch. Again an artisan appreciates that the definition of "touch" used in this application includes near-touch (contactless touch) by placing a finger, stylus, pen or other device with a predetermined distance of the touchscreen to be considered a "touch" even without actual contact. For example, as illustrated in FIG. 7D, while the electronic device 100 displays an image, after a first touch 741 for the center point of the image is detected, when a straight second touch 743 progressing from left to right is detected, the electronic device 100 inverts (745) left/right of the relevant image, and displays the same.

However, if at step 713 the coordinates of the first touch do not exist within the threshold range from the center of the image, the electronic device 100 at step 717 performs an inclined display of the image depending on a progression distance and a progression direction of the second touch based on the coordinates of the first touch, and then ends the algorithm according to an embodiment of the present invention.

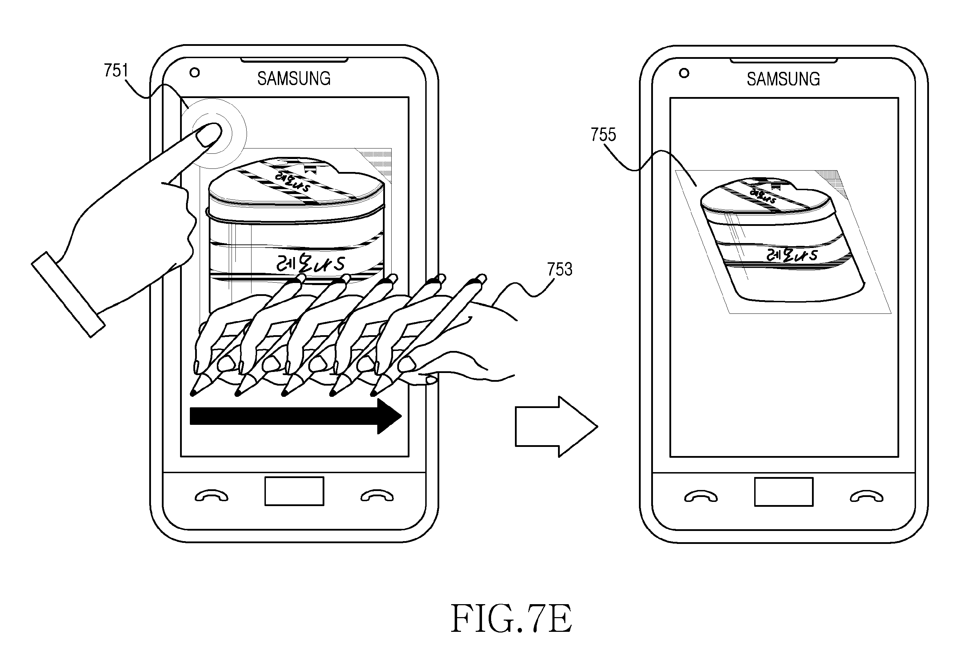

For example, as illustrated in FIG. 7E, while the electronic device 100 displays an image, after a first touch 751 for specific coordinates, not a center point of the image is detected, when a straight second touch 753 progressing from left to right is detected, the electronic device 100 inclines (755) the relevant image by an angle corresponding to a progression distance of the second touch 753 based on the coordinates of the first touch 751 and displays the same. Here, the electronic device 100 may store in advance a corresponding slope and a corresponding direction for each progression distance and progression direction of the second touch 753.

In contrast, if at step 711 the second touch is a curved touch, the electronic device 100 at step 719 rotates the image depending on a progression distance and a direction of the second touch based on the coordinates of the first touch, and ends the algorithm according to an embodiment of the present invention.

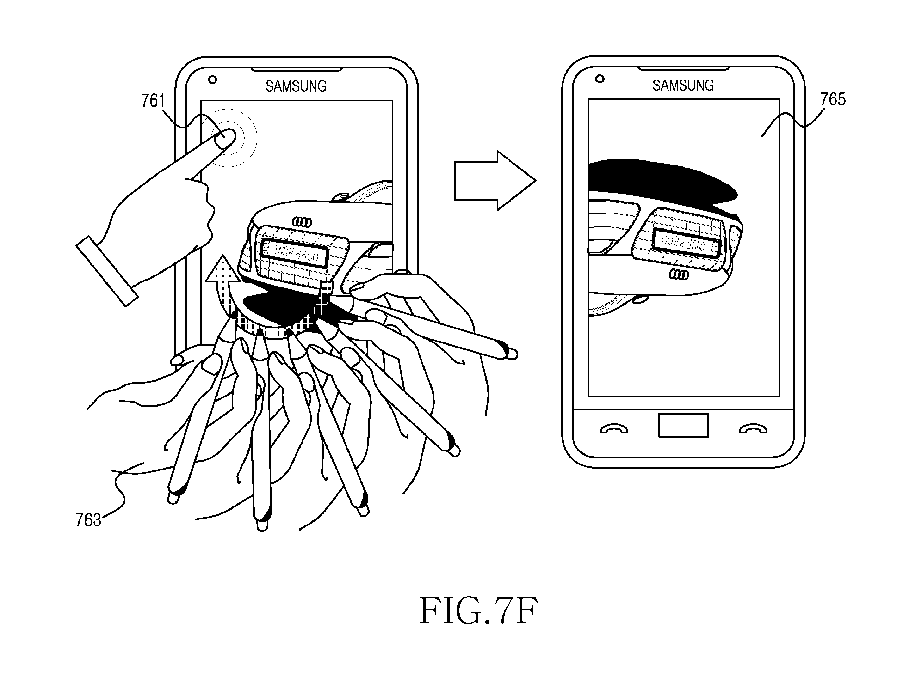

For example, as illustrated in FIG. 7F, while the electronic device 100 displays an image, after a first touch 761 for specific coordinates is detected, when a curved second touch 763 progressing from right to left is detected, the electronic device 100 rotates the relevant image by a progression distance and a direction of the second touch 763 and displays the same. Here, the electronic device 100 may store in advance a corresponding rotation angle for each progression distance and progression direction of the second touch.

Methods according to exemplary embodiments described in claims and/or specification of the present invention may be implemented in the form of machine executable code loaded into hardware, hardware, or a combination of these in a broadest reasonable interpretation. The above-described methods according to the present invention can be implemented in hardware, firmware or as software or computer code that is stored in a recording medium such as a CD ROM, flash, EPROM, EEPROM, RAM, a floppy disk, thumbnail drive, a hard disk, or a magneto-optical disk or computer code downloaded over a network originally stored on a remote recording medium and then stored on a non-transitory medium and loaded into hardware such as a processor or microprocessor. The machine executable code stored on the non-transitory machine readable medium can be stored on a local recording medium, and loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor", "microprocessor" or "unit" constitute hardware in the claimed invention. Finally, the claimed invention can include the use of a location information server comprising more than one server, such as a proxy server.

In case of implementation in the form of software, a computer readable storage medium storing one or more programs (software modules) may be provided. The one or more programs stored in the computer readable storage medium are configured for execution by one or more processors inside the electronic device. The one or more programs include instructions to configure hardware for allowing the electronic device to execute methods according to the embodiments described in claims and/or specification of the present invention.

These programs (software modules, software) may be stored in a random access memory, a non-volatile memory including a flash memory, Read Only Memory (ROM), an Electrically Erasable Programmable Read Only Memory (EEPROM), a magnetic disc storage device, a Compact Disc (CD)-ROM, Digital Versatile Discs (DVDs) or other types of optical storage devices, and a magnetic cassette. Alternatively, these programs may be stored in a memory configured in a combination of some or all of these. Also, a plurality of respective memories may be provided.

Also, these programs may be stored in an attachable storage device that can access the electronic device via a communication network such as the Internet, Intranet, Local Area Network (LAN), Wide LAN (WLAN), and a Storage Area Network (SAN), or a communication network configured in combination of these. This storage device may access the electronic device via an external port.

Also, a separate storage device on a communication network may access a portable electronic device.

Although the invention has been shown and described with reference to certain exemplary embodiments thereof, it will be understood by those skilled in the art that various changes in form and details may be made therein without departing from the scope of the invention as defined by the appended claims and their equivalents. Therefore, the scope of the present invention should not be limited to the above-described embodiments but should be determined by not only the appended claims but also the equivalents thereof.

## Claims

1. A method for processing a multi-touch function in an electronic device, the method comprising:
displaying data of a predetermined data type by a display unit having a touchscreen;
detecting a first touch by the touchscreen;
detecting a second touch by the touchscreen while the first touch of the touchscreen is maintained; and
performing by a processor a function corresponding to the displayed data type and the second touch based on coordinates of the first touch.

2. The method of claim 1, further comprising:
after the detecting of the second touch, detecting the displayed data type,
wherein the displayed data type by the touchscreen comprises at least one of text data, list data, image data, and authentication request data.

3. The method of claim 2, wherein performing by the processor the function corresponding to the displayed data type and the second touch based on the coordinates of the first touch comprises:
when the displayed data type comprises a text type, highlighting text displayed between the coordinates of the first touch and end coordinates of the second touch; and
displaying a menu for processing the highlighted text,
wherein the menu for processing the text comprises at least one of a text highlighting mark, duplicate, store, search, crop, and delete.

4. The method of claim 3, wherein highlighting the text displayed between the coordinates of the first touch and the coordinates of the second touch further comprises:
highlighting text displayed between an X coordinate of the first touch of the touchscreen and an X coordinate of a point of the touchscreen where the second touch ends among text corresponding to a Y coordinate of the first touch.

5. The method of claim 2, wherein performing the function corresponding to the displayed data type and the second touch based on coordinates of the first touch further comprises:
when the displayed data type comprises a list type, moving items that are displayed between the coordinates of the first touch and start coordinates of the second touch at a position above or below an item displayed on the first touch coordinates and displaying the same.

6. The method of claim 2, wherein performing the function corresponding to the displayed data type and the second touch based on the coordinates of the first touch further comprises:
when the displayed data type comprises an authentication request type, determining whether the coordinates of the first touch and a pattern of the second touch coincide with coordinates and a pre-stored pattern in a storage device; and
determining by the processor whether to allow an access to a relevant function depending on whether the coordinates of the first touch and the pattern of the second touch coincide with the coordinates and the pre-stored pattern.

7. The method of claim 2, wherein performing the function corresponding to the displayed data type and the second touch based on the coordinates of the first touch further comprises:
when the displayed data type comprises an image type, determining whether coordinates of a position where the second touch is performed are positioned on a straight line with the coordinates of the first touch; and
when determining that the coordinates of the position where the second touch is performed are positioned on the straight line with the coordinates of the first touch, magnifying or reducing the image by a progression distance and a progression direction of the second touch based on the coordinates of the first touch.

8. The method of claim 7, further comprising:
when the coordinates of the position where the second touch is performed are not positioned on the straight line with the coordinates of the first touch, determining by the processor a progression shape of the second touch along the touch screen;
when the second touch comprising a straight line shape, determining whether the coordinates of the first touch exist within a threshold range from a center of the image; and
when the coordinates of the first touch are located within the threshold range from the center of the image, inverting the image depending on the progression direction of the second touch based on the coordinates of the first touch.

9. The method of claim 8, further comprising:
when the coordinates of the first touch are not located within the threshold range from the center of the image, inclining the image by an angle corresponding to the progression distance and the direction of the second touch based on the coordinates of the first touch, and displaying the same.

10. The method of claim 8, further comprising:
when a progression shape of the second touch comprises a curved shape along the touchscreen, rotating the image by an angle corresponding to the progression distance and the direction of the second touch based on the coordinates of the first touch, and displaying the same.

11. An electronic device for processing a function corresponding to a multi-touch, the electronic device comprising:
at least one processor;
a touch screen;
a memory for storing programs and data;
the at least one processor being arranged to control the touch screen and the memory, wherein the at least one processor is further arranged to control displaying the data, detecting a first touch, and detecting a second touch while the first touch is maintained to perform a function corresponding to a displayed data type and the second touch based on coordinates of the first touch.

12. The electronic device of claim 11, wherein the processor is further arranged to detect the displayed data type after detecting the second touch,
wherein the displayed data type comprises at least one of text data, list data, image data, and authentication request data.

13. The electronic device of claim 12, wherein the processor is further arranged when the displayed data type is a text type, to highlight text displayed between the coordinates of the first touch and end coordinates of the second touch, and to display a menu for processing the highlighted text,
wherein the menu for processing the text comprises at least one of a text highlighting mark, duplicate, store, search, crop, and delete.

14. The electronic device of claim 13, wherein the processor is further arranged to highlight text displayed between an X coordinate of the first touch and an X coordinate of a point where the second touch ends among text corresponding to a Y coordinate of the first touch.

15. A computer program comprising computer program code means adapted to perform all the steps of any one of the method claims 1 to 9 when the computer program is run on a computer.
